# EUROPEAN PATENT APPLICATION

(11) **EP 4 621 553 A1**
(43) Date of publication of application: **24.09.2025**
(21) Application number: 25159036.0
(22) Date of filing: 20.02.2025
(51) Int. Cl.: G06F 8/20, G06F 8/30, G06F 8/34, G06F 8/70, G06F 40/40, G06N 20/00

(54) **AUTONOMOUS DRIVING SOLUTION PLATFORM AND OPERATION METHOD THEREOF**

(30) Priority: 11.03.2024 KR 20240033709
(71) Applicant: e-Intelligence Co., Ltd., Daegu 42994 (KR)
(72) Inventor: BAE, Kyeongryeol, 41970 Jung-gu (KR); KIM, Sujin, 41261 Dong-gu (KR)
(74) Representative: Gille Hrabal Partnerschaftsgesellschaft mbB Patentanwälte

(57) **Abstract**

An operation method of an autonomous driving solution platform is disclosed, comprising: receiving a request from a client terminal for a development query required to develop a detailed module, which is a part of a plurality of modules included in the autonomous driving solution platform; using a master protocol in which a type and timing of information to be transmitted and received between the plurality of modules and a condition for transmitting and receiving the information are predefined to derive the remaining module linked to an operation of the detailed module among the plurality of modules; providing an infrastructure environment for development or examination of the detailed module; and using the developed and examined detailed module using the remaining modules and the infrastructure environment to implement and provide one or more of functions of advanced driver assistance systems (ADAS) requested by a client of the client terminal.

## Description

### CROSS-REFERENCE TO RELATED PATENT APPLICATION

This patent application is based on and claims priority of Korean Patent Application No. 2024-0033709 filed on March 11, in the Korean Intellectual Property Office, the entire contents of which are hereby incorporated by reference.

This patent application is a result of a national project. For reference, the project number is 20024815, and the overseeing government department is the Ministry of Trade, Industry and Energy. The project management organization is the Korea Institute for Industrial Technology Planning and Evaluation. The name of the research project is the Innovation Project for Autonomous Driving Technology Development, and the specific research project is the Development of Omnidirectional Multi-Camera Based Surrounding Situation Prediction Technology for LV.4 Autonomous Vehicles. The executing organization is the applicant of this patent application, and the research period is from April 1, 2023, to December 31, 2023.

### BACKGROUND

### 1. Technical Field

The present disclosure relates to an autonomous driving solution platform and an operation method thereof, and more particularly, to a technology that allows any client to quickly and reliably develop a desired module by providing a total infrastructure environment necessary for development or examination to clients who want to develop a specific module driven in an autonomous driving solution.

### 2. Related Art

Unless otherwise indicated herein, the contents described in this section are not the related art to the claims of this application, and the contents included in this section should not be construed as the related art.

Autonomous driving solutions are systems that enable vehicles to be driven by themselves without drivers' intervention. The autonomous driving solutions use various sensors, cameras, radars, etc., to detect and analyze the surrounding environment, thereby determining and adjusting a vehicle's driving path. Machine learning and artificial intelligence technologies form a part of the autonomous driving solution. The autonomous driving solutions enable vehicles to provide safe driving in various road situations without human intervention.

Autonomous driving solutions for vehicles include several modules. For example, the autonomous driving solutions may include sensing modules, perception modules, planning modules, control modules, interaction modules, etc. Each of these modules is integrated and operated within one solution, such as a platform.

Meanwhile, among autonomous driving solution development companies, there are companies that develop all modules included in autonomous driving solutions, but among these, there are companies that specialize in the development of specific modules and develop only these specific modules.

Companies that develop only specific modules examine the development process as well as the results after developing the module. **In** this case, the examination process requires the corresponding module as well as the remaining modules included in the autonomous driving solutions. The reason the remaining modules are required is because, as described above, each module is organically connected to each other within one platform. Specifically, each module of the autonomous driving solutions should exchange data with each other while being organically connected, and for operation, each module should operate in a predetermined order. Therefore, the entire platform is required during the development process of the specific module as well as when examining the developed modules.

However, it is not easy for the development companies to acquire the remaining modules except for the specific modules for which the development has been requested. Even when the remaining modules are acquired externally, during the development or examination process, it is not easy for the development companies to manipulate and adjust these remaining modules, which are not developed by development companies but acquired externally, according to the wishes of the development companies.

### SUMMARY

The present disclosure provides a total infrastructure environment necessary for development or examination to a client who wants to develop a specific module driven in an autonomous driving solution.

However, the problems to be solved according to an embodiment are not limited to those described above.

In accordance with an aspect of the present disclosure, there is an operation method of an autonomous driving solution platform. The operation method includes receiving a request from a client terminal for a development query required to develop a detailed module, which is a part of a plurality of modules included in the autonomous driving solution platform; using a master protocol in which a type and timing of information to be transmitted and received between the plurality of modules and a condition for transmitting and receiving the information are predefined to derive the remaining module linked to an operation of the detailed module among the plurality of modules; providing an infrastructure environment for development or examination of the detailed module; and using the developed and examined detailed module using the remaining modules and the infrastructure environment to implement and provide one or more of functions of advanced driver assistance systems (ADAS) requested by a client of the client terminal.

Further, the operation method may include controlling a display unit of the client terminal to display a screen on which one or more of the plurality of modules are selected as the detailed module.

Further, the operation method may include comparing a first detailed specification for the detailed module included in the development query and a second detailed specification for a corresponding detailed module among the plurality of modules based on the master protocol; identifying a difference between the first detailed specification and the second detailed specification from the comparison results; and generating an interface combination module between the detailed module included in the development query and the remaining modules based on the identified difference, wherein the infrastructure environment provides an environment in which the detailed module in a process of the development or examination is combined with the remaining modules through the interface combination module.

Further, the difference may include at least one of a case where the first detailed specification has a condition that is not in the second detailed specification, a case where a condition in the second detailed specification is not in the first detailed specification, and a case where the first detailed specification has a different condition from the second detailed specification.

Further, the interface combination module may be generated so that a result of combining the detailed module included in the development query with the interface combination module is the same as the corresponding detailed module.

Further, the interface combination module may be generated by a generative artificial intelligence technique.

Further, the development query may include at least one of information on one or more of the plurality of functions supported by the ADAS, information on an environment for the detailed module to operate, information on a test environment of the detailed module, and information on a certificate for the detailed module.

Further, the ADAS may include at least one of forward collision warning (FCW), lane departure warning (LDW), a lane keeping assist system (LKAS), autonomous emergency braking (AER), adaptive cruise control (ACC), lane keeping assist (LKA), a lane centering system (LCS), obstacle detection (OD), and a lane detection (LD) system.

Further, the plurality of modules may be implemented to be driven independently from each other.

Further, the plurality of modules may include perception, fusion, planning, control, interaction, sensing, visualization, security, a high definition (HD) map, or localization.

Further, each of the plurality of modules may be blackboxed for security and a source code of each module is kept in a private state with respect to the client, but input data and output data of each module is provided to the client by the master protocol.

In accordance with another aspect of the present disclosure, there is a computer program stored in a computer readable recording medium, wherein the computer program is programmed to: receive a request from a client terminal for a development query required to develop a detailed module, which is a part of a plurality of modules included in the autonomous driving solution platform; use a master protocol in which a type and timing of information to be transmitted and received between the plurality of modules and a condition for transmitting and receiving the information are predefined to derive the remaining module linked to an operation of the detailed module among the plurality of modules; provide an infrastructure environment for development or examination of the detailed modules; and use the developed and examined detailed module using the remaining modules and the infrastructure environment to implement and provide one or more of functions of advanced driver assistance systems (ADAS) requested by a client of the client terminal.

In accordance with an aspect of the present disclosure, there is an autonomous driving solution platform. The autonomous driving solution platform includes a communication unit; a memory that stores at least one instruction; and a processor. wherein the at least one instruction is executed by the processor to: receive a request from a client terminal for a development query required to develop a detailed module, which is a part of a plurality of modules included in the autonomous driving solution platform; use a master protocol in which a type and timing of information to be transmitted and received between the plurality of modules and a condition for transmitting and receiving the information are predefined to derive the remaining module linked to an operation of the detailed module among the plurality of modules; provide an infrastructure environment for development or examination of the detailed module; and use the developed and examined detailed module using the remaining modules and the infrastructure environment to implement and provide one or more of functions of advanced driver assistance systems (ADAS) requested by a client of the client terminal.

### BRIEF DESCRIPTION OF DRAWINGS

FIG. 1 is a diagram illustrating a system for providing an autonomous driving solution platform according to an embodiment.
FIG. 2 is an exemplary block diagram illustrating a configuration of an autonomous driving solution platform according to an embodiment.
FIG. 3 is an exemplary flowchart illustrating a procedure for training a generative language model according to an embodiment.
FIG. 4 is an exemplary diagram of a process of providing autonomous driving solution platform according to an embodiment.
FIG. 5 is a diagram illustrating a node configuration and detailed specifications provided by the autonomous driving solution platform according to the embodiment.
FIG. 6 is an exemplary diagram of a process of operating an autonomous driving solution platform according to an embodiment.

### DESCRIPTION OF EXAMPLE EMBODIMENTS

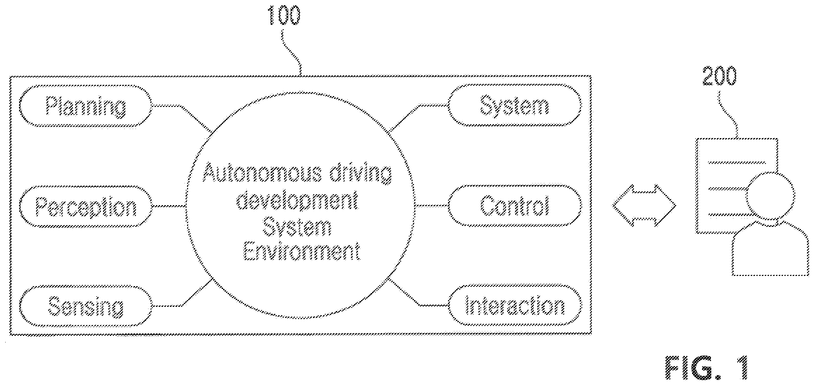

FIG. 1 is a diagram illustrating a system for providing an autonomous driving solution platform according to an embodiment.

Referring to FIG. 1, a system for providing an autonomous driving solution platform according to the embodiment may be configured to include an autonomous driving solution platform 100 and a client terminal 200. In this case, the autonomous driving solution platform 100 and the client terminal 200 may be connected by a network.

Here, the network refers to a wireless or wired network. Among these, the wireless network may include at least one of, for example, long-term evolution (LTE), LTE advance (LTE-A), code division multiple access (CDMA), wideband CDMA (WCDMA), universal mobile telecommunications system (UMTS), wireless broadband (WiBro), wireless fidelity (WiFi), Bluetooth, near field communication (NFC), global navigation satellite system (GNSS), etc. In addition, the wired network may include at least one of, for example, a universal serial bus (USB), a high definition multimedia interface (HDMI), recommended standard 232 (RS-232), a local area network (LAN), a wide area network (WAN), Internet, a telephone network, etc.

The autonomous driving solution platform 100 is designed to provide a client who wishes to develop or examine detailed modules included in autonomous driving solutions with a total infrastructure environment necessary for development or examination of such detailed modules. Then, a client may implement one or more of functions of advanced driver assistance systems (ADAS) through the provided infrastructure environment.

Here, the autonomous driving solution includes a plurality of modules. For example, the autonomous driving solution includes a planning module, a perception module, a sensing module, a system module, a control module, or an interaction module, but is limited to thereto.

In addition, the detailed module refers to a module that the client wishes to develop or examine among the plurality of modules described above. This detailed module may include one or more modules, and for example, a cognitive module and a planning module may be included as such detailed modules.

In some cases, the detailed module that a client wishes to develop or examine may have different specifications from the module provided in the autonomous driving solution platform 100. For example, a first detailed specification for the detailed module included in the development query and a second detailed specification for a corresponding detailed module among the plurality of modules may be different from each other. More specifically, there may be a case where the first detailed specification has a condition that is not in the second detailed specification, a case where a condition in the second detailed specification is not in the first detailed specification, and a case where the first detailed specification has a different condition from the second detailed specification. This is because the client may want to develop his/her own detailed modules.

However, when a client develops his/her own detailed module, the interface or integrated operation with the remaining modules of the autonomous driving solution platform 100 may become a problem. This is because there are differences between his/her own detailed module and the remaining modules.

In this case, even in this case, according to an embodiment, the autonomous driving solution platform 100 may provide an environment in which all individual requirements of such clients may be reflected. For example, even when a client requests any detailed module that is different from the existing module, a difference between the module included in the autonomous driving solution platform 100 and the detailed module is identified, a module corresponding to the difference, for example, an interface combination module that enables interface or fusion between the detailed module to be developed and the remaining modules in the autonomous driving solution platform 100 is generated and provided to the client, so the corresponding client may freely examine and verify his or her own detailed module developed in this way while freely developing the detailed module he or she wants within the autonomous driving solution platform 100 while linking or integrating the detailed module with the remaining modules. This will be described in more detail below.

Meanwhile, the reason the above descriptions are possible is because a master protocol is stored in the autonomous driving solution platform 100 according to the embodiment. The master protocol refers to a type of rule in which the types and timing of information to be transmitted and received between the plurality of modules included in the autonomous driving solution platform 100 and the conditions for transmitting and receiving the information are predefined. For example, when the sensing module acquires information on surrounding vehicles or global positioning system (GPS) information of its own vehicle, whether the perception module will recognize this information when or under what conditions is defined in the master protocol, when, under what conditions, and how to establish the planning using this perceived information is defined in the planning module, what task needs to be performed in the background to ensure that each of the modules operates smoothly, what data should be received from each module and how should the state of each module be checked, what followup actions or operations should be performed according to the check results, etc., are defined in the system module, the control module, or the interaction module.

Meanwhile, as will be described below, each of the above-described modules is implemented so that the modules can be driven independently from each other. Therefore, when one or more detailed modules among the plurality of modules are specified, such detailed modules are grouped as the remaining modules, and then what information the detailed module should exchange with the remaining modules, at what time and under what conditions, etc., may be derived based on the master protocol. By the same principle, the remaining modules may derive detailed modules and what information should be transmitted and received at what time and under what conditions, etc., based on this master protocol. Here, the reason why the above-described information can be derived is that, as will be described below, the autonomous driving solution platform 100 according to the embodiment adopts a generative language model. According to the generative language model that has been released to date, it is possible to not only understand software or source code, but also generate the software or source code according to the user's desired conditions or requests. Using this, since there are the plurality of modules and the detailed specifications of each of the plurality of modules are defined in the master protocol, when some of the modules are defined as the detailed modules and the remaining modules, the types, conditions, and timing of information that should be transmitted and received between the detailed modules and the remaining modules may be easily derived or defined by the generative language model.

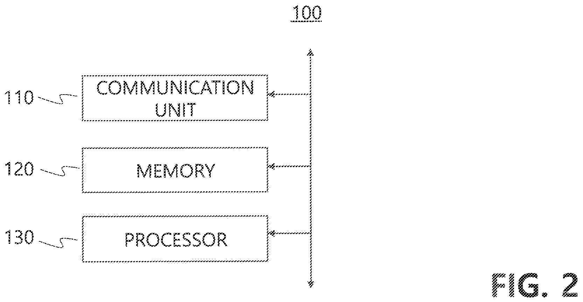

Meanwhile, this autonomous driving solution platform 100 may be implemented to include the configuration illustrated in FIG. 2, but is not limited thereto. Referring to FIG. 2, the autonomous driving solution platform 100 can be implemented to include a communication unit 110, a memory 120, and a processor 130.

The communication unit 110 can be implemented using a wired or wireless communication module. The autonomous driving solution platform 100 may communicate with an external terminal, such as the client terminal 200 in FIG. 1, through the communication unit 110.

The memory 120 can be implemented by a medium that stores information. The medium may include at least one of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk, but is not limited thereto.

Various types of information may be stored in this memory 120. For example, the information acquired by the autonomous driving solution platform 100 from the client terminal 200, etc., through the communication unit 110 may be stored in the memory 120. In addition, the memory 120 may store a plurality of training data to be used for training various types of models or modules, which will be described below.

In addition, various types of modules or models may be implemented in the memory 120. When these modules or models are executed by the processor 130, which will be described below, the desired functions are performed. Each module or model will be described below.

Next, the processor 130 will be described. First, the processor 130 according to the embodiment may execute at least one instruction stored in the memory 120 to perform technical features according to embodiments of the present disclosure, which will be described below.

In an embodiment, the processor 130 may be composed of at least one core. In addition, this processor 130 may be for data analysis and/or processing such as a central processing unit (CPU), a general purpose graphics processing unit (GPGPU), and a tensor processing unit (TPU).

The processor 130 described above may train a neural network or a model designed in a machine learning or deep learning method. To this end, the processor 130 may perform calculations for training a neural network, such as processing input data for training, extracting features from the input data, calculating errors, and updating weights of the neural network using backpropagation.

In addition, the processor 130 may perform inference for a predetermined purpose using a model implemented in an artificial neural network method.

Hereinafter, the artificial neural network will be described. The model in this specification may refer to any type of computer program that operates based on a network function, an artificial neural network, and/or a neural network. Throughout this specification, a model, a neural network, a network function, and a neural network may be used interchangeably. In the neural network, one or more nodes are interconnected through one or more links to form an input node and output node relationship within the neural network. The characteristics of the neural network may be determined according to the number of nodes and links within the neural network, the correlation between the nodes and links, and the weight values assigned to each link. The neural network may be composed of a set of one or more nodes. A subset of nodes that constitutes the neural network may form a layer.

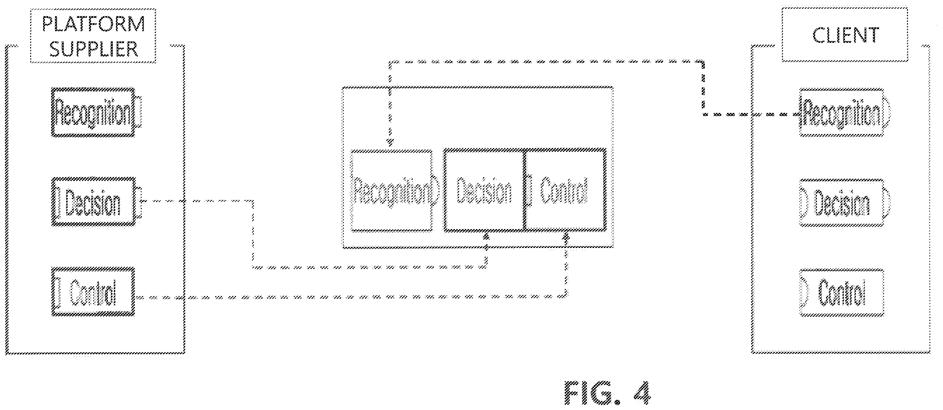

Among the neural networks, a deep neural network (DNN) may refer to a neural network including a plurality of hidden layers in addition to an input layer and an output layer. As the concept of the deep neural network is illustratively illustrated in FIG. 4, the hidden layer in the middle may be composed of one or more, preferably two or more deep neural networks.

The deep neural network may include a convolutional neural network (CNN), a recurrent neural network (RNN), a long short term memory (LSTM) network, a generative pre-trained transformer (GPT), an auto encoder, generative adversarial networks (GAN), a restricted Boltzmann machine (RBM), a deep belief network (DBN), a Q network, a U network, a Siamese network, a generative adversarial network (GAN), a transformer, etc.

Alternatively, according to an embodiment, the deep neural network may be a model trained using transfer learning. Here, the transfer learning refers to a learning method that pre-trains a large amount of unlabeled training data using a semi-supervised learning or self-learning method to obtain a pre-trained model (or base unit) having a first task through multilevel marketing (MLM), a network service provider (NSP), etc., and implements a target model by training labeled training data using a supervised learning method in order to fine-tune the pre-trained model to be suitable for a second task. As one of the models trained using the transfer learning method, there are bidirectional encoder representations from transformers (BERT), but is not limited thereto.

Neural networks including the deep neural network described above may be trained to minimize output errors. In the neural network learning, a process of repeatedly inputting training data to the neural network, calculating an output of the neural network for the training data and target errors, and updating weights of each node of the neural network by backpropagating errors of the neural network from an output layer of the neural network to an input layer in order to reduce the errors may be performed.

Meanwhile, a model according to an embodiment may be implemented to borrow at least a portion of a transformer. Here, the transformer may be composed of an encoder that encodes embedded data and a decoder that decodes the encoded data. The transformer may have a structure that receives a series of data, goes through encoding and decoding operations, and outputs a series of data of different types. In an embodiment, a series of data may be processed into a form of which data can be calculated by the transformer. The process of processing the series of data into a form of which the data can be calculated by the transformer may include an embedding process. Expressions, such as a data token, an embedding vector, and an embedding token, may refer to the embedded data in the form that the transformer may process.

In order for the transformer to encode and decode the series of data, the encoders and decoders within the transformer may utilize an attention algorithm. Here, the attention algorithm may refer to an algorithm that calculates a similarity of one or more keys for a given query, reflects the given similarity in values corresponding to each key, and then calculates the attention value by weight-summing the values reflecting the similarity.

In this case, various types of attention algorithms may be classified depending on how the query, the key, and value are set. For example, the attention may be acquired by setting the query, the key, and the value to be the same, which may refer to a self-attention algorithm. In contrast, in order to process a series of input data in parallel, the attention may be obtained by reducing the dimension of the embedding vector and obtaining an individual attention head for each divided embedding vector, which may refer to a multi-head attention algorithm.

In an embodiment, the transformer may be composed of modules that perform a plurality of multi-head self-attention algorithms or a multi-head encoder-decoder algorithm. In an embodiment, the transformer may also include additional components other than the attention algorithm, such as the embedding, the normalization, or the SoftMax. A method of configuring a transformer using an attention algorithm may include the method disclosed in Vaswani et al., Attention Is All You Need, 2017 NIPS, which is incorporated herein by reference.

The transformer can be applied to various data domains, such as embedded natural language, segmented image data, or audio waveforms. As a result, the transformer may convert a series of input data into a series of output data. Data having various data domains may be converted to be able to be processed by the transformer, which is referred to as embedding.

In addition, the transformer may process additional data expressing relative positional or phase relationships between the series of input data. Alternatively, the series of input data may be embedded by additionally reflecting vectors expressing the relative positional relationship or phase relationship between the input data in the series of input data. In an example, the relative positional relationship between the series of input data may include, but is not limited to, a word order within a natural language sentence, the relative positional relationship of each segmented image, a temporal order of the segmented audio waveforms, etc. The process of adding the information expressing the relative positional or phase relationships between the series of input data may be referred to as positional encoding.

Hereinafter, by allowing the processor 130 to execute at least one instruction stored in the memory 120, various operations, functions, etc., that the autonomous driving solution platform 100 may perform will be described.

First, the processor 130 may control the communication unit 110. Through this, the autonomous driving solution platform 100 may acquire information by communicating with the client terminal 200, etc., illustrated in FIG. 1 through the communication unit 110.

In addition, the processor 130 may read the above-described data or instructions stored in the memory 120 and record new data or instructions into the memory 120. In addition, the processor 130 may modify or delete already recorded data or instructions.

In addition, the processor 130 may execute various models or modules stored in the memory 120. Here, these models or modules may be implemented using the artificial neural network method or rule-based method described above. For example, the language model, etc., can be implemented, and therefore, the language model will be described below.

The language model refers to a model generated based on human language. The language model may be acquired in various ways. According to an embodiment, the language model may be acquired using a transfer learning method. In the transfer learning, as described above, a process of pre-training a large amount of unlabeled training data (e.g., corpus) using a semi-supervised learning or self-learning method to obtain a pre-trained model (or base unit) having a first task is performed. Thereafter, a process of fine-tuning the pre-trained model to be suitable for the second task is performed. In this fine tuning, the labeled learning data is used for learning using the supervised learning method. In an embodiment, one of the models trained using the transfer learning method, there are the bidirectional encoder representations from transformers (BERT) or the generative pre-trained transformer, etc., but is not limited thereto.

Here, this language model according to an embodiment may be the generative language model based on GPT-3 or GPT-4. Specifically, the GPT-3 is a third generation language prediction model of a GPT-n series generated by a company called OpenAI. The GPT-3 is composed of 175 billion parameters, and is more than twice a size of a previous version GPT-2 introduced in May 2020. The GPT-3 is a part of a natural language processing (NLP) system for pre-trained languages. Of course, the language model according to an embodiment is not limited to being implemented only by the GPT-n series, and may be implemented by various other generative language model methods.

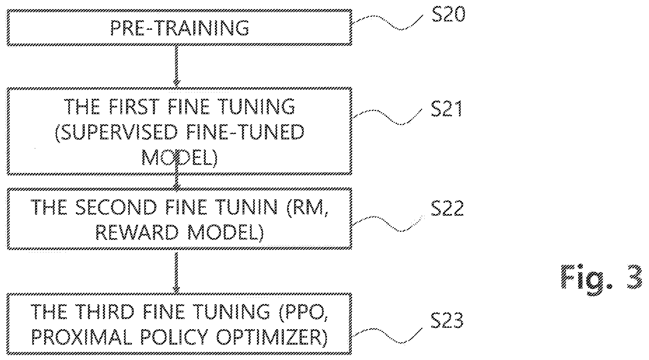

The process of training the generative language model is illustrated in FIG. 3. Referring to FIG. 3, the language model according to an embodiment may be pre-trained using a general language (S20), or may be pre-trained based on various types of multimodal data.

Meanwhile, reinforcement learning by human feedback (RLHF) may be performed in the fine tuning of the above-described language model. The RLHF refers to the fact that the information determined by humans is used for learning in the fine tuning. For example, during the fine-tuning process in the RLHF, a training process using a dialogue set generated by human and a process of training a plurality of outputs generated by a language model using ranking selected by human may be performed. More specifically, referring to FIG. 3, a supervised fine-tuned model (SFT) is generated by a conversation set generated by human (S21), and then the ranking of results output by the SFT model is fed back to the corresponding model (reward model (RM)) (S22). Thereafter, the fine-tuning by proximal policy optimization (PPO) is performed (S23). Here, the fine-tuning by the PPO refers to a reinforcement learning policy algorithm, which refers to an algorithm that continuously adjusts a current policy based on tasks an agent performs and received rewards. In this PPO, the process proceeds in the following order: new prompt → PPO → generate output → calculate reward, but the calculate reward is updated and provided again as a new prompt.

Next, referring back to FIG. 1, the client terminal 200 is a developer client that develops a detailed module that is a specific module included in an autonomous driving solution. In an embodiment, the client terminal 200 may request a development query required for detailed module development from the autonomous driving solution platform 100. In an embodiment, the development query is a series of data required for the detailed module development and examination.

In an embodiment, the development query may include at least one of information on one or more of the plurality of functions supported by the ADAS, information on the environment for the detailed module to operate, information on a test environment of the detailed module, and information on a certificate for the detailed module, but is not limited thereto. In addition, according to an embodiment, the client may select a detailed module he or she wishes to develop through the client terminal 200. For example, in the display unit of the client terminal, a screen that may select one or more of the plurality of modules of the autonomous driving solution platform 100 as the detailed module may be displayed, which may be implemented by the control of the autonomous driving solution platform 100 described above, but is not limited thereto.

Hereinafter, specific examples of the development or verification process performed by the autonomous driving solution platform 100 will be described.

FIG. 4 is a diagram for describing services provided by an autonomous driving solution platform according to an embodiment.

Referring to FIG. 4, the detailed module that the client wishes to develop is a perception module. **In** addition, the remaining modules required for the operation of the perception module are a decision module and a control module, and are provided to the client as an 'infrastructure environment' by the autonomous driving solution platform 100, as described above.

Here, whether the decision module and the control module are necessary for the operation of the perception module may be derived using the above-described master protocol. This is because, as described above, the types and timing of information to be transmitted and received between the plurality of modules and the conditions for transmitting and receiving the information are already defined in this master protocol. Here, the derivation method may vary, and of course, it may be derived by a generative language model as described above.

Here, the source code of the decision module and control module provided as the infrastructure environment may not be disclosed. Therefore, developers of the autonomous driving solution platform 100 do not need to worry about leakage of their trade secrets to the outside.

However, protocols such as conditions for operation of the above-described decision module and control module are disclosed. Accordingly, the client may develop or examine the above-described infrastructure environment to suit their taste while adjusting the infrastructure environment as they wish.

Meanwhile, the perception module, which is the detailed module that the client wants to develop, may have different detailed specifications from the perception module that the platform provider illustrated in FIG. 3 has. For example, a first detailed specification for the detailed module included in the development query and a second detailed specification for a corresponding detailed module among the plurality of modules may be different from each other. More specifically, there may be a case where the first detailed specification has a condition that is not in the second detailed specification, a case where a condition in the second detailed specification is not in the first detailed specification, and a case where the first detailed specification has a different condition from the second detailed specification. This is because the client may want to develop his/her own detailed modules.

However, when a client develops his/her own detailed module, the interface or integrated operation with the remaining modules of the autonomous driving solution platform 100 may become a problem. This is because there are differences between his/her own detailed module and the remaining modules.

Even in this case, according to an embodiment, the autonomous driving solution platform 100 may provide an environment in which all individual requirements of such clients may be reflected. For example, even when a client requests any detailed module that is different from the existing module, a difference between the module included in the autonomous driving solution platform 100 and the detailed module is identified, a module corresponding to the difference, for example, an interface combination module that enables interface or fusion between the detailed module to be developed and the remaining modules in the autonomous driving solution platform 100 is generated and provided to the client, so the corresponding client may freely examine and verify his or her own detailed module developed in this way while freely developing the detailed module he or she wants within the autonomous driving solution platform 100 while linking or integrating the detailed module with the remaining modules.

That is, the interface combination module may be generated so that the result of combining the detailed module included in the development query with the interface combination module is the same as the corresponding detailed module. **In** addition, the generative language model described above may be used in this generation process. As described above, according to the generative language model that has been released to date, it is possible to not only understand software or source code, but also generate the software or source code according to the user's desired conditions or requests. Using this, since there are the plurality of modules and the detailed specifications for each module are defined in the master protocol, when some of the modules and the detailed specifications are defined as the detailed modules and the remaining modules, and furthermore, when there is the difference in detailed specifications between the detailed module desired by the client and the detailed module provided by the platform, the results of combining the detailed module included in the development query and the interface combination module may be generated to be the same as the corresponding detailed module. In addition, the types, conditions, timing, etc., of the information to be transmitted and received between the results generated in this way and the remaining modules may be easily derived or defined using this generative language model and using the master protocol described above.

Through this, it is possible to enable the client to easily solve the difficulties the client is experiencing during the detailed module development. In addition, the autonomous driving solution platform 100 may provide the infrastructure environment using Docker, allowing the client as the developer to easily use the infrastructure environment in other environments. In an embodiment, the Docker is a platform for developing, deploying, and running containerized applications, allowing application programs to be packaged and deployed in the standardized environment. In an embodiment, a container is a software package that includes all the codes, libraries, and settings required to run the application programs. The Docker provides the tool and platform used to build and manage the container, making it easy to run the tool and platform in various environments.

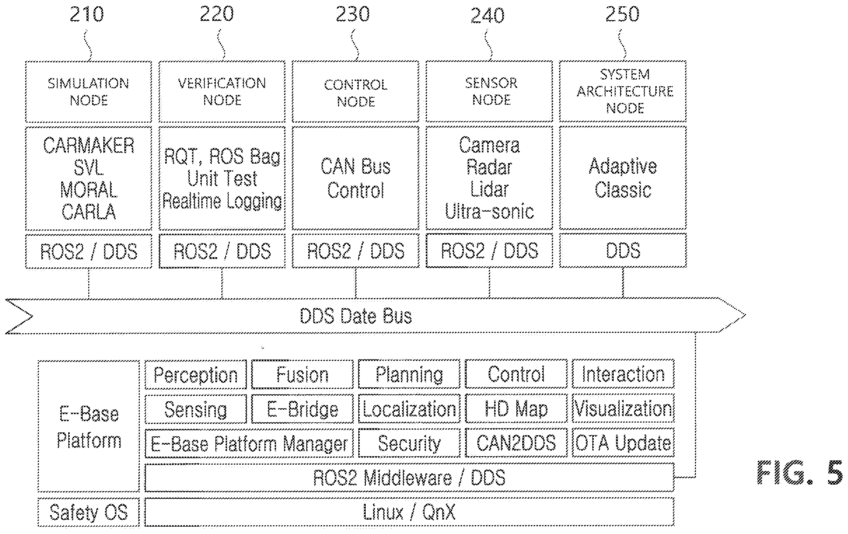

FIG. 5 is a diagram illustrating a node configuration of the autonomous driving solution and detailed specifications provided by the autonomous driving solution platform according to the embodiment.

A plurality of modules are independently implemented in the autonomous driving solution according to the embodiment. In an embodiment, the autonomous driving solution may be implemented with each module performing various functions such as simulation, verification, control, sensing, and system architecture management. The modules configured in the autonomous driving solution are not limited to the modules described above.

In addition, the modules configured independently of the autonomous driving solution are blackboxed for security, and the entire source code of each module is kept in a private state. However, the input data and output data of each module are predefined and may be used to generate the infrastructure environment. In an embodiment, the autonomous driving solution platform makes the internal logic of each module configured in the autonomous driving solution private, but defines the input and output of each module in advance. Through this, clients that are other companies may use the remaining modules provided by the autonomous driving solution.

In addition, as illustrated in FIG. 5, each module configured in the autonomous driving solution according to the embodiment may be noded and implemented as a node. For example, the autonomous driving solution platform may configure each module individually in the software architecture and implement the modules as a node that is an independent unit. The nodes minimize interactions or dependencies between modules and make modules easy to reuse.

Referring to FIG. 5, the autonomous driving solution according to the embodiment may be implemented to include a simulation node 210, a verification node 220, a control node 230, a sensor node 240, and a system architecture node 250. In an embodiment, the autonomous driving solution platform may nodeize each module in advance and store the modules.

In an embodiment, the simulation node 210 performs automobile simulation. To this end, the simulation node 210 may be equipped with a car and autonomous driving simulation solution (e.g., CARMAKER, etc.). In an embodiment, the car and autonomous driving simulation solution provides a realistic vehicle simulation environment. In addition, the simulation node 210 may be equipped with MORAI, CARLA, etc., which provide simulation validation and learning (SVL), autonomous driving, ADAS test, and simulation solution. In an embodiment, the CARLA is an open source simulation platform for developing and testing the autonomous driving algorithm. In an embodiment, the simulation node 210 simulates the actual road environment and executes various autonomous driving scenarios that simulate cars and road infrastructure through the installed solution.

The verification node 220 verifies the effectiveness of the autonomous driving system. In an embodiment, the verification node 220 is equipped with the open source robot software framework for developing the autonomous driving system, such as ROS Qt GUI Plugin (RQT), and provides ROS Bat that logs-in data and is a playback format. In addition, the verification node 220 provides a process for unit test and records and stores data or events that occur in real time through real-time logging.

The control node 230 is a node that controls vehicle communication protocols such as a CAN bus, and the sensor node 240 is a node that detects the environment around the vehicle. In an embodiment, the sensor node 240 detects the environment around the vehicle through sensors mounted on the vehicle, such as front, rear, and side cameras, Lidar, radar, and ultra sonic. The system architecture node 250 manages the interaction between each node. In addition, in an embodiment, the system architecture node 250 may be equipped with automotive open system architecture (AUTOSAR) to provide a platform for automotive software development. In an embodiment, the system architecture node 250 may manage the interaction between each node to implement adaptive cruise control (ACC) and classic cruise control (CCC). In an embodiment, each node exchanges data through a protocol including data distribution service (DDS) and robot operating system 2 (ROS2).

In an embodiment, the autonomous driving solution platform provides functions for each module of the autonomous driving solution, enabling the integrated operation of the detailed module and the remaining modules. To this end, the autonomous driving solution platform derives detailed specifications corresponding to the development queries requested from the client, and configures the infrastructure environment by selectively extracting input/output data and source code for the detailed specifications. Thereafter, the configured infrastructure environment is provided to the client terminal.

In an embodiment, as illustrated in FIG. 5, the detailed specification includes perception, fusion, planning, control, interaction, sensing, visualization, security, a HD map, localization, etc., but is not limited thereto.

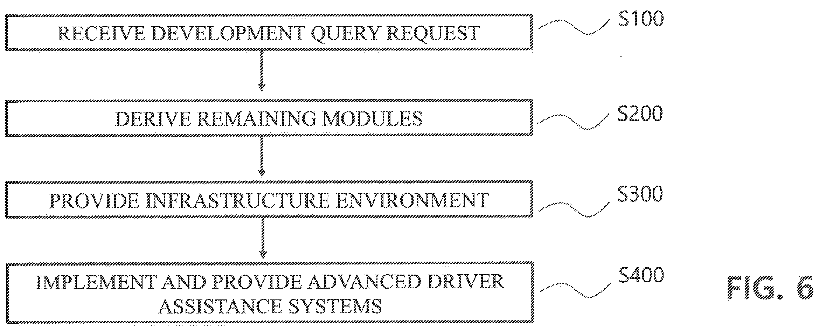

FIG. 6 is a diagram illustrating a process of operating an autonomous driving solution platform according to an embodiment. Here, this flowchart illustrated in FIG. 6 may be executed by the autonomous driving solution platform 100 illustrated in FIG. 1, but is not limited thereto. In addition, the flowchart is merely illustrative, and the spirit of the present invention is not limited thereto. For example, according to an embodiment, each operation may be performed in a different order from that illustrated in FIG. 6, or at least one operation not illustrated in FIG. 6 may be additionally performed.

Referring to FIG. 6, an operation S 100 of receiving the request from the client terminal for the development query required to develop the detailed module, which is a part of the plurality of modules included in the autonomous driving solution platform is performed. Here, these plural modules may be implemented to be driven independently from each other.

In addition, the development query may include at least one of information on one or more of the plurality of functions supported by the ADAS, information on the environment for the detailed module to operate, information on a test environment of the detailed module, and information on a certificate for the detailed module, but is not limited thereto. In this case, the above-described functions may include at least one of forward collision warning (FCW), lane departure warning (LDW), a lane keeping assist system (LKAS), autonomous emergency braking (AER), adaptive cruise control (ACC), lane keeping assist (LKA), a lane centering system (LCS), obstacle detection (OD), and a lane detection (LD) system.

In addition, the detailed module described above may be selected by the client through the client terminal 200. For example, in the display unit of the client terminal, a screen that may select one or more of the plurality of modules of the autonomous driving solution platform 100 as the detailed module may be displayed, which may be implemented by the control of the autonomous driving solution platform 100 described above, but is not limited thereto.

Next, an operation S200 of using the master protocol in which the type and timing of information to be transmitted and received between the plurality of modules and the condition for transmitting and receiving the information are predefined to derive the remaining module linked to the operation of the detailed module among the plurality of modules is performed.

The master protocol here has already been described, and therefore, additional description thereof will be omitted.

Next, an operation S300 of providing the infrastructure environment for the development or examination of the detailed module is performed. In this case, according to an embodiment, the infrastructure environment may additionally include the interface combination module described above. In other words, when there is the difference between the first detailed specification for the detailed module included in the development query and the second detailed specification for the corresponding detailed module among the plurality of modules when compared based on the master protocol, the interface combination module described above may be generated based on the difference. In this case, the interface combination module may be generated so that the result of combining the detailed module included in the development query with the interface combination module is the same as the corresponding detailed module. In addition, the generative artificial intelligence may be used for such generation.

Meanwhile, it is as described above that the above-described difference may include at least one of the case where the first detailed specification has the condition that is not in the second detailed specification, the case where a condition in the second detailed specification is not in the first detailed specification, and the case where the first detailed specification has a different condition from the second detailed specification.

Next, an operation S400 of using the developed and examined detailed module using the remaining modules and the infrastructure environment to implement and provide one or more of functions of the ADAS requested by the client of the client terminal is performed. In other words, once the development or examination of the detailed module is completed, one or more of the ADAS functions may be implemented and provided through this detailed module combined with the remaining modules. Here, one or more ADAS functions may be implemented and provided in the form of a solution such as a product, and since various known methods for the same exist, detailed description thereof will be omitted.

As described above, according to an embodiment, the same environment in which the autonomous driving solution platform including all other modules is provided to the developer developing the specific module may be provided, so it may be confirmed that the specific module is organically connected and dynamically connected to other modules included in the autonomous driving solution during the examination of the specific module.

**In** addition, by combining the specific developed module with the remaining modules, an appropriate infrastructure environment is provided to enable the test of the developed module in the entire autonomous driving system, so it is possible to quickly develop the autonomous driving solution.

In addition, the profit generation of the autonomous driving solution companies may be maximized by producing and selling the results of the test of the specific modules through the embodiment.

Furthermore, it is possible to distribute the burden of the entire development and test operation. It is possible to facilitate the collaboration between the autonomous driving solution module companies and improve the entire development speed and efficiency.

Meanwhile, the methods according to various embodiments described above may be implemented in the form of the computer program stored in the computer-readable recording medium programmed to perform each operation of the methods, and may also be implemented in the form of the computer-readable recording medium that stores the computer program programmed to perform each operation of the methods.

According to an embodiment, an autonomous driving solution platform including all other modules can be provided to a developer developing a specific module, so it can be checked that the specific module is organically connected and dynamically connected to other modules included in the autonomous driving solution during the examination of the specific module.

In addition, by combining the specific developed module with the remaining modules, an appropriate infrastructure environment is provided to enable the test of the developed module in the entire autonomous driving system, so it is possible to quickly develop the autonomous driving solution.

Furthermore, it is possible to distribute the burden of the entire development and test operations for the autonomous driving solution. It is possible to facilitate the collaboration between the autonomous driving solution module companies and improve the entire development speed and efficiency.

It should be understood that the effects of the present invention are not limited to the above effects and include all effects that can be inferred from the configuration of the invention described in the detailed description or claims of the present invention.

The spirit of the present invention has been illustratively described hereinabove. It will be appreciated by those skilled in the art that various modifications and alterations may be made without departing from the essential characteristics of the present invention. Accordingly, embodiments disclosed in the present invention are not to limit the spirit of the present invention, but are to describe the spirit of the present invention. The scope of the present invention is not limited to these embodiments. The scope of the present invention should be interpreted by the following claims, and it should be interpreted that all the spirits equivalent to the following claims fall within the scope of the present invention.

## Claims

1. An operation method of an autonomous driving solution platform, comprising:
receiving a request from a client terminal for a development query required to develop a detailed module, which is a part of a plurality of modules included in the autonomous driving solution platform;
using a master protocol in which a type and timing of information to be transmitted and received between the plurality of modules and a condition for transmitting and receiving the information are predefined to derive the remaining module linked to an operation of the detailed module among the plurality of modules;
providing an infrastructure environment for development or examination of the detailed module; and
using the developed and examined detailed module using the remaining modules and the infrastructure environment to implement and provide one or more of functions of advanced driver assistance systems (ADAS) requested by a client of the client terminal.

2. The operation method of claim 1, further comprising controlling a display unit of the client terminal to display a screen on which one or more of the plurality of modules are selected as the detailed module.

3. The operation method of claim 1, further comprising:
comparing a first detailed specification for the detailed module included in the development query and a second detailed specification for a corresponding detailed module among the plurality of modules based on the master protocol;
identifying a difference between the first detailed specification and the second detailed specification from the comparison results; and
generating an interface combination module between the detailed module included in the development query and the remaining modules based on the identified difference,
wherein the infrastructure environment provides an environment in which the detailed module in a process of the development or examination is combined with the remaining modules through the interface combination module.

4. The operation method of claim 3, wherein the difference includes at least one of a case where the first detailed specification has a condition that is not in the second detailed specification, a case where a condition in the second detailed specification is not in the first detailed specification, and a case where the first detailed specification has a different condition from the second detailed specification.

5. The operation method of claim 3, wherein the interface combination module is generated so that a result of combining the detailed module included in the development query with the interface combination module is the same as the corresponding detailed module.

6. The operation method of claim 3, wherein the interface combination module is generated by a generative artificial intelligence technique.

7. The operation method of claim 1, wherein the development query includes at least one of information on one or more of the plurality of functions supported by the ADAS, information on an environment for the detailed module to operate, information on a test environment of the detailed module, and information on a certificate for the detailed module.

8. The operation method of claim 7, wherein the ADAS includes at least one of forward collision warning (FCW), lane departure warning (LDW), a lane keeping assist system (LKAS), autonomous emergency braking (AER), adaptive cruise control (ACC), lane keeping assist (LKA), a lane centering system (LCS), obstacle detection (OD), and a lane detection (LD) system.

9. The operation method of claim 1, wherein the plurality of modules are implemented to be driven independently from each other.

10. The operation method of claim 1, wherein the plurality of modules include perception, fusion, planning, control, interaction, sensing, visualization, security, a high definition (HD) map, or localization.

11. The operation method of claim 1, wherein each of the plurality of modules is blackboxed for security and a source code of each module is kept in a private state with respect to the client, but input data and output data of each module is provided to the client by the master protocol.

12. A computer program stored in a computer readable recording medium, wherein the computer program is programmed to:
receive a request from a client terminal for a development query required to develop a detailed module, which is a part of a plurality of modules included in the autonomous driving solution platform;
use a master protocol in which a type and timing of information to be transmitted and received between the plurality of modules and a condition for transmitting and receiving the information are predefined to derive the remaining module linked to an operation of the detailed module among the plurality of modules;
provide an infrastructure environment for development or examination of the detailed modules; and
use the developed and examined detailed module using the remaining modules and the infrastructure environment to implement and provide one or more of functions of advanced driver assistance systems (ADAS) requested by a client of the client terminal.

13. An autonomous driving solution platform comprising:
a communication unit;
a memory that stores at least one instruction; and
a processor,
wherein the at least one instruction is executed by the processor to:
receive a request from a client terminal for a development query required to develop a detailed module, which is a part of a plurality of modules included in the autonomous driving solution platform;
use a master protocol in which a type and timing of information to be transmitted and received between the plurality of modules and a condition for transmitting and receiving the information are predefined to derive the remaining module linked to an operation of the detailed module among the plurality of modules;
provide an infrastructure environment for development or examination of the detailed module; and
use the developed and examined detailed module using the remaining modules and the infrastructure environment to implement and provide one or more of functions of advanced driver assistance systems (ADAS) requested by a client of the client terminal.
